# EUROPEAN PATENT SPECIFICATION

(11) **EP 0 533 249 B1**
(45) Date of publication and mention of the grant of the patent: **02.12.1998**
(21) Application number: 92202751.1
(22) Date of filing: 10.09.1992
(51) Int. Cl.: G11B 15/087, G11B 15/07, G11B 20/12

(54) **Arrangement for obtaining recorded tape-like magnetic record carriers, record carrier obtained by means of the arrangement, and reproducing device for reproducing the record carrier**
Anordnung zum Erhalten bandförmiger bespielter magnetischer Aufzeichnungsträger, mit der Anordnung erhaltener Aufzeichnungsträger, und Wiedergabeanordnung zum Wiedergeben des Aufzeichnungsträgers
Dispositif de réalisation de supports d'enregistrement magnétiques en forme de bande enregistrée, support d'enregistrement obtenu par la mise en oeuvre du dispositif et dispositif de lecture du support d'enregistrement

(30) Priority: 17.09.1991 EP 91202384
(43) Date of publication of application: 24.03.1993
(73) Proprietor: Koninklijke Philips Electronics N.V., 5621 BA Eindhoven (NL)
(72) Inventor: Hoogendoorn, Abraham, NL-5656 AA Eindhoven (NL); Lokhoff, Gerardus Cornelis Petrus, NL-5656 AA Eindhoven (NL)
(74) Representative: van der Kruk, Willem Leonardus

(56) References cited:
- PATENT ABSTRACTS OF JAPAN vol. 13, no. 108 (P-843)15 March 1989 & JP-A-63 285 779
- PATENT ABSTRACTS OF JAPAN vol. 14, no. 191 (P-1038)18 April 1990 & JP-A-20 37505
- PATENT ABSTRACTS OF JAPAN vol. 12, no. 319 (P-751)30 August 1988 & JP-A-63 083 964
- PATENT ABSTRACTS OF JAPAN vol. 9, no. 72 (P-345)2 April 1985 & JP-A-59 203 208

## Description

The invention relates to an arrangement for obtaining recorded tape-like magnetic record carriers comprising digital information, for example digital audio information, recorded on an A and a B side, which sides comprise each one or more contiguous tracks running in longitudinal direction on the record carrier in which tracks the digital information is recorded, the information being recorded in the tracks on the A and B sides in such a way that the record carrier is to be transported in a first direction for reproducing the digital information from a track on the A side and the record carrier is to be transported in a second direction opposite to the first direction for reproducing the digital information from a track on the B side, which arrangement comprises recording means for recording the digital information in the tracks on the A and B sides. The invention likewise relates to a record carrier obtained by means of the arrangement, and to a reproducing device for reproducing the record carrier. In the case of digital information, it may be a matter of digital audio information as already observed hereinbefore. Alternatively, it may also be a matter of digital data.

The arrangement of the type mentioned in the opening paragraph, for example, for the case where digital information in the form of digital audio information is concerned, is known in the form of consumer equipment with which home-recorded tapes may be made and in the form of professional duplicating equipment with which prerecorded record carriers may be produced.

In this context one may think of record carriers of the SDAT type as described in the title of "The Art of Digital Audio" by J. Watkinson, Focal Press, 1988, Chapter 9, more specifically, Chapter 9.20 on pp. 345-350. Another possibility is the record carriers of the DCC type as described in EP-A-0 455 293, published on 06.11.91 (Dutch Patent Application No. 90.01.038), referenced (1) in the bibliography. The Patent Application furthermore describes the arrangement of the type mentioned in the opening paragraph for producing prerecorded record carriers.

In the Patent Application a description is given of how the duplication of the digital audio information is realised on a slave medium so as to obtain the prerecorded record carriers. With respect to an optional embodiment in that Patent Application there is described that the audio information of the A and B sides is recorded simultaneously on the slave medium during duplication. This is effected with a certain transport direction of the slave medium. This means that for either of the sides, A or B, the audio information is recorded in a direction corresponding to the direction in which the information is read out again at a later instant, but that for the other side, B or A, the audio information is recorded in a direction opposite to the direction in which the information is read out again at a later instant.

As a result, the total transfer characteristic of recording and reproduction proves not to be identical for the audio information on the two sides, leading to the fact that the reproduction of the information from a side reproduced in a direction opposite to the transport direction of recording has a poorer quality.

It is an object of the invention to provide measures so that the reproduction quality of the audio information reproduced from said side may be improved.

The recording arrangement of the type mentioned in the opening paragraph is thereto characterized in that the arrangement comprises marker signal generator means for generating a first marker denoting the transport direction of the record carrier during the recording of information in the track on the A side, and for generating a second marker denoting the transport direction of the record carrier during the recording of information in the track on the B side and means for recording the first and second markers. Two optional further embodiments are conceivable in this respect. In the first embodiment the arrangement is characterized in that the recording means are further arranged for recording the first marker on the A side and for recording the second marker on the B side, and in that an input of the recording means is thereto coupled to an output of the marker signal generator means. In this case the markers are recorded on the record carrier itself. In the second embodiment the arrangement is further characterized in that the arrangement comprises second recording means arranged for recording the first and second markers on a cassette housing in which a record carrier is accommodated and in that an input of the second recording means is thereto coupled to an output of the marker signal generator means. In this case the markers are recorded on the cassette housing in optical, magnetic or mechanical form.

The invention is based on the recognition that the cause for the different transfer characteristic lies in the fact that the magnetization patterns in the record carrier look different, so that during reproduction a special equalization is to be used for compensating these differences. By indicating for each side by way of markers in what direction the digital information is recorded, these markers may be detected in the reproducing device and the equalization adapted accordingly.

In the first embodiment the first or second marker may be recorded on the record carrier, for example, at the beginning of the A or B side.

Preferably, the markers are recurrently recorded on the record carrier in longitudinal direction. This achieves that even if reproduction is started somewhere halfway in longitudinal direction of a record carrier side, the markers can be detected, so that proper equalization can be utilized.

Furthermore, preferably the first and second markers are recorded both on the A and B sides. This achieves that when reproducing, for example, the A side, both the first and second markers may be detected, so that the second marker is already known to the reproducing device. If at any moment an autoreverse function for changing to reproduction of the B side is performed, the proper equalization may be automatically set even before reproduction of the B side has commenced, so that a very fast autoreverse operation can be realised. For if the second marker is not known during reproduction of the A side, during the autoreverse operation a change will first have to be made to reproduction of the B side, so as to make a detection of the second marker recorded on the B side possible. Then the correct equalization can be utilized. Not until that moment can reproduction of the B side be commenced.

The markers may be recorded in an auxiliary channel on the record carrier. This auxiliary channel may have the form, for example, of an auxiliary track in which digital auxiliary information corresponding to the information in said auxiliary channel is recorded.

Various dependent claims describe further preferred embodiments of the recording arrangement according to the invention.

In a first embodiment the reproducing device comprises reading means which include a read head device for reading digital information from a track on the A or B side, equalization means for performing an equalization filtering on the digital information read from a track, characterized in that the read head device is further arranged for reading from the A or B side the first or second marker respectively, in that the reading means further include generator means for deriving first and second control signals respectively, from the markers belonging to a side of the record carrier while the digital information is being read out from this side depending on whether the transport direction during reproduction is similar or opposite respectively, to the transport direction during recording, in that the equalization means are arranged for performing, in response to the first or second control signal respectively, a first or second equalization filtering on the digital information read from the tracks. If the markers are properly recorded on the cassette housing, the reproducing device is characterized in that the reproducing device comprises second reading means arranged for reading the first or second markers from the cassette housing, in that the second reading means further include generating means for deriving a first or second control signal from the markers belonging to a side of the record carrier while the digital information is being read from this side depending on whether the transport direction during reproduction is similar or opposite respectively, to the transport direction during recording, in that the equalization means are arranged for performing, in response to the first or second control signal, a first or second equalization filtering respectively, on the digital information read from the tracks.

It should further be observed that GB 2,134,309A also describes the simultaneous recording of information on A and B sides of the record carrier, and shows an arrangement comprising the features recited in the preamble of claim 1. However, no markers denoting the direction of recording are then recorded on the record carrier. A reproducing device comprising the features recited in the preamble of claim 28 is known from JP-A 63285776.

There is still a further solution possible *in lieu of* the previous solutions. Let us assume that a fixed agreement can be made with the manufacturers of prerecorded record carriers that the prerecorded record carriers are always recorded in the same fashion. The A side is then always recorded, for example, in forward direction and the B side always in reverse direction. Such prerecorded record carriers are now to have a marker denoting that it is a prerecorded record carrier. During the reproduction of a record carrier the reproducing device then only needs to detect which side is played and whether it is a prerecorded record carrier. The equalization filter to be used may then be derived direct from this information. Claim 28 relates to such embodiment.

The invention will be further explained with reference to a number of embodiments represented in the appended drawings, in which:
Fig. 1 shows the effect of the transport direction on the magnetization patterns in a magnetic record carrier during recording;
Fig. 2 shows a possible track pattern on the record carrier;
Fig. 3 shows the format of the auxiliary signal recorded in an auxiliary track on the record carrier;
Fig. 4 shows the contents of the two block sections in the blocks in the auxiliary signal;
Fig. 5 shows a possible embodiment of the first and second markers;
Fig. 6 shows at Fig. 6a a recording arrangement and at Fig. 6b a reproducing device;
Fig. 7 shows an embodiment of a detection means for detecting the markers and deriving a control signal therefrom;
Fig. 8 shows at Fig. 8a a first embodiment and at Fig. 8b a second embodiment of an equalization filter in the reproducing device;
Fig. 9 shows at Fig. 9a a recording of the markers on a cassette housing and at Fig. 9b the detection of these markers; and
Fig. 10 shows another reproducing device according to the invention.

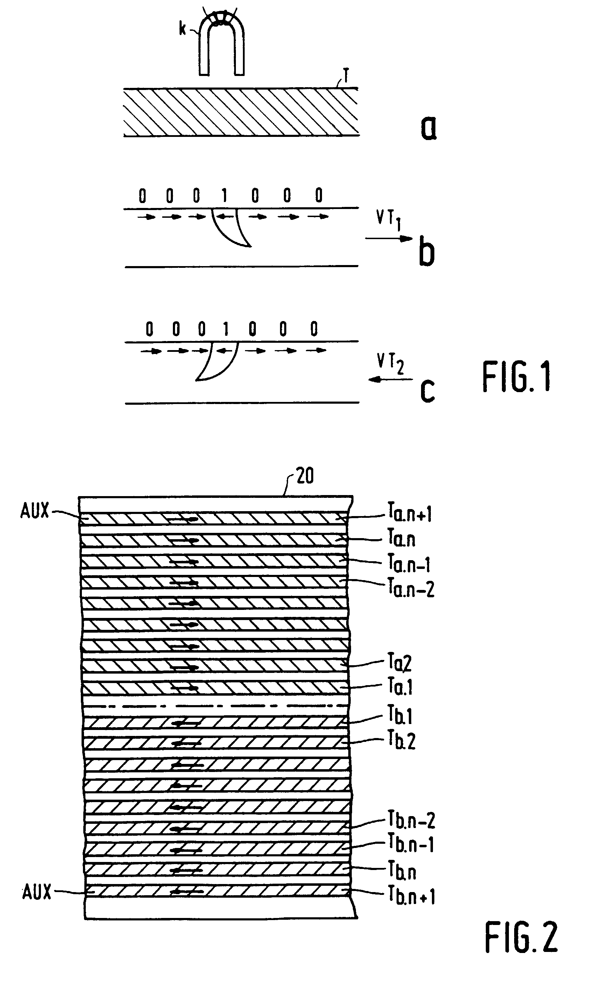

Fig. 1 diagrammatically shows the differences in magnetization patterns on the record carrier developed due to the transport direction of the record carrier during recording in one longitudinal direction or in the direction just opposite thereto. Fig. 1a shows the disposition of the recording head K relative to the record carrier T of which a cross-sectional view is given. During the recording operation the record carrier may be transported in a direction from left to right in the drawing Figure or just in a direction opposite thereto, from right to left. Let us assume that a digital signal ... 0001000 ... is to be recorded on a record carrier. With a transport direction VT₁ from left to right a magnetization pattern is developed as represented in Fig. 1b. The arrows in this Figure denote in diagrammatic outline the magnetization direction in the magnetic layer of the record carrier. With the reverse transport direction VT₂ a magnetization pattern is obtained as shown in Fig. 1c. A comparison between Fig. 1b and 1c shows that the limitations between the zones having a left-to-right magnetization and the zones having a right-to-left magnetization are not identical.

Either of the directions VT₁ or VT₂ is the transport direction for reading the record carrier. Figs. 1b and 1c distinctly show that the magnetization patterns seen in transverse direction of the record carrier are not identical. This means that there is a distinction between reading the information as written according to Fig. 1b and as written according to Fig. 1c. This means that reading the information as represented in Fig. 1b leads to a different output signal than reading the information as represented in Fig. 1c.

According to a first embodiment of the invention, the record carrier includes a marker denoting in what direction the information available on a record carrier is recorded, that is, "forward", that is to say, in similar direction as the direction in which the information is read out, or "reverse", that is to say, in a direction opposite thereto.

Fig. 2 shows in the diagram an embodiment of the record carrier 20 according to the invention with tracks disposed on the record carrier. On the A side there are n+ 1 tracks T_{a.1} to T_{a.n+1} running in parallel and in longitudinal direction on the record carrier. On the B side there are also n+1 tracks T_{b.1} to T_{b.n+1}.

Digitized and coded information, for example audio information, is recorded in the tracks T_{a.1} to T_{a.n} and T_{b.1} to T_{b.n}. The format of the audio information as recorded in the tracks is extensively discussed in EP-A-0 456 299, published on 13.11.91, (Dutch Patent Application No. 90.01.039) publication (2) in the bibliography n is equal to 8, but this is not essential. n may have any integer value greater than or equal to 1. A track consists of successive frames ..., j-1, j, j+1, ... interrupted by interframe gaps IFG. The interframe gaps are extensively discussed in EP-A-0 448 160, published on 25.09.91, (Dutch Patent Application No. 90.00.635), publication (4) in the bibliography.

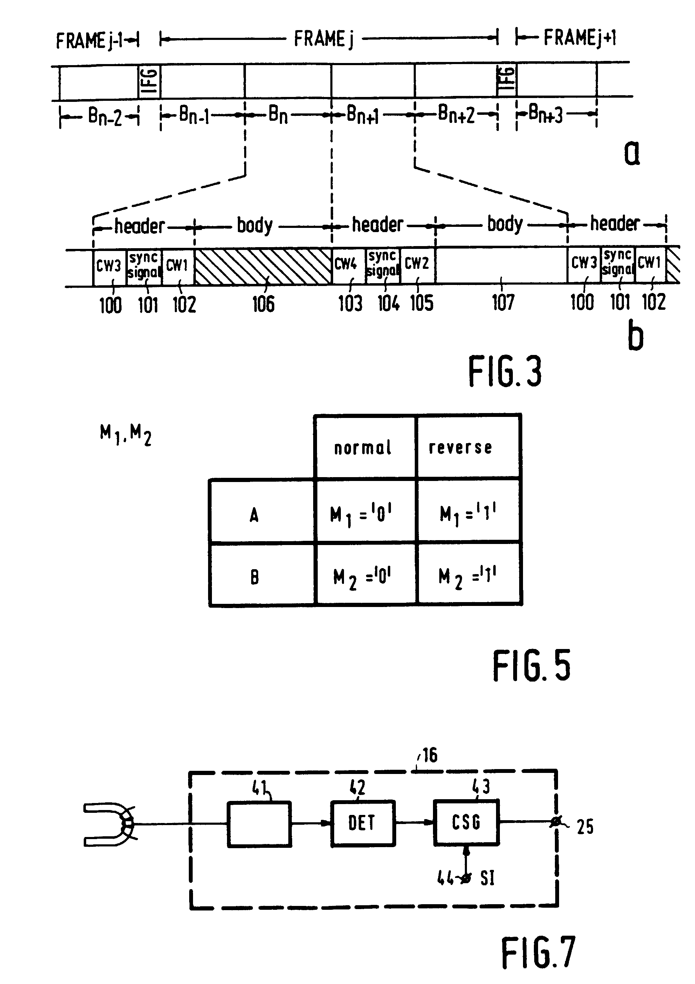

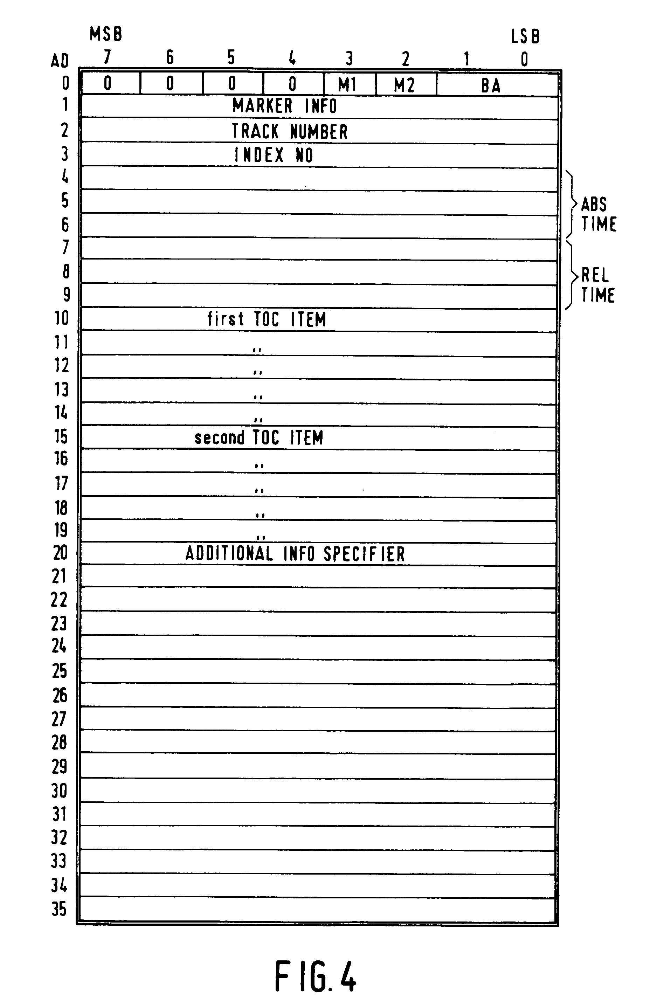

The tracks T_{a.n+1} and T_{b.n+1} are auxiliary tracks, referenced AUX, in which an auxiliary signal is recorded as described in EP-A-0 436 991, published on 17.07.91, (Dutch Patent Application No. 90.00.039), referenced (3) in the bibliography. The auxiliary signal is recorded in successive frames. Fig. 3a shows an auxiliary track in which the frames ..., j-1, j, j+1, ... alternated with interframe gaps IFG are recorded in the track. Each frame comprises a number of successive blocks B. In the present example they are four. Each block B comprises a first block section (header) and a second block section (body) as shown in Fig. 3b. The header contains codewords and a synchronization (sync) signal. The auxiliary signal is included in the body. The auxiliary signal is additional information about the recorded audio information. One may think of a Table of Contents in this respect denoting the initial positions of all the recorded pieces of music (tracks), the order of the recorded pieces of music (track numbers), the absolute time denoting the period of time during reproduction elapsed from the beginning of a volume, the relative time denoting the period of time elapsed from the beginning of reproduction of a piece of music (track), the residual absolute time and the residual relative time. Furthermore, various types of marker information may be included in the auxiliary signal. For further explanation, reference be made to reference (1). For the further description of the contents of the AUX tracks, reference be made to Fig. 4.

The arrows in the tracks in Fig. 2 denote the transport direction of the record carrier 20 during the reading of the A or B side respectively. For reading the A side the record carrier moves from left to right and for reading the B side the record carrier moves from right to left.

Hereinafter there will be described what the contents of the body of the block Bₙ may look like. The contents of the body will be described with reference to Fig. 4, while it should be observed that the bytes shown in Fig. 4 denote information which is first to be subjected to an 8-to-10 modulation prior to the information being recorded on the record carrier.

The body comprises 48 bytes, *i.e.* 36 data bytes AD₀ to AD₃₅ and 12 parity bytes, of 8 bits each. The order in which the bytes are recorded in the body is that AD₀ is recorded first, while bytes having a higher index are recorded later in the body. Fig. 4 shows only the first 36 data bytes of a body. The initial four bits of the byte AD₀ are zeroes. This is a format choice valid for this specific application. Bit 3 of this byte is the first marker and is referenced M₁. Bit 2 of this byte is the second marker and referenced M₂. The markers M₁ and M₂ may be a '0' or '1'.

The bits 0 and 1 of the first byte are referenced BA. They denote the block address ranging from 0 to 3 and denoting which of the four blocks in the frame is concerned.

The second byte AD₁ contains different marker information and will not be discussed any further. The byte AD₂ denotes the number of the piece of music (track) stored in the tracks T_{a.1} to T_{a.n} or T_{b.1} to T_{b.n} respectively, on the same position seen in longitudinal direction of the record carrier, depending on whether the body of Fig. 4 relates to a block section of a block from the track T_{a.n+1} or the track T_{b.n+1}.

The byte AD₃ contains, for example, index information. With this index the piece of music (track) may be subdivided into separate parts.

The bytes AD₄ to AD₆ are used for denoting an absolute time from the beginning of the record carrier and will not be discussed any further. The bytes AD₇ to AD₉ are used for denoting the relative time from the beginning of the current piece of music (track) and will not be discussed any further either.

The bytes AD₁₀ to AD₁₉ are used for storing the Table of Contents of the record carrier. The bytes AD₂₀ to AD₃₅ are used for recording additional information and will not be discussed any further.

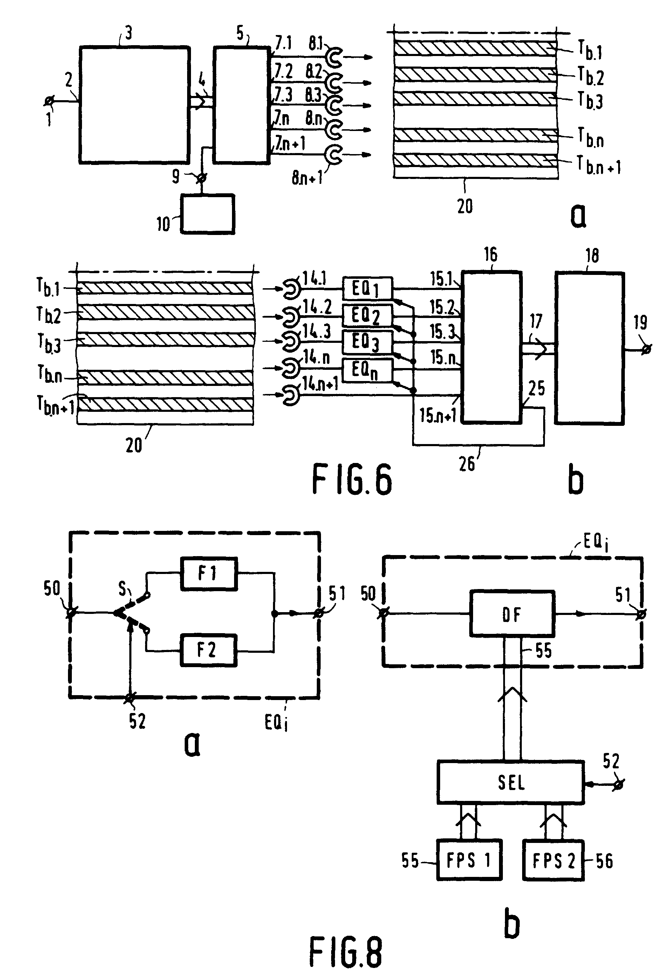

Fig. 5 shows the connotation of the markers M₁ and M₂. The first marker M₁ denotes the transport direction of the record carrier during the recording of a side of the record carrier relative to the transport direction of the record carrier during reproduction of this side. Fig. 5 shows that if M₁ is '0', the transport direction of the record carrier during recording of the A side, is similar to the transport direction during reproduction of the A side. If M₁ is '1' the transport direction of the record carrier during recording of the A side is just the reverse to the transport direction during reproduction of the A side.

Fig. 5 further clarifies that if M₂ is '0', the transport direction of the record carrier during recording of the B side is similar to the transport direction during reproduction of the B side. If M₂ is '1', the transport direction of the record carrier during recording of the B side is opposite to the transport direction during reproduction of the B side. The situations in which M₁ and M₂ are '0', are referenced 'normal' in Fig. 5. The situations in which M₁ and M₂ are '1', are referenced 'reverse'.

In all the blocks Bₙ whose bodies comprise volumes, denoted in Fig. 3 by means of the hatching of the body 106, the markers are positioned in the first byte AD₀ at the positions reserved for this purpose.

For consumer equipment a side is recorded with a transport direction similar to the transport direction for reproduction of this side. Thus, this means that consumer equipment will generally generate a marker M₁,M₂ = '0,0' during recording, which marker is then stored at the position in the first byte shown in Fig. 4.

In arrangements for producing prerecorded record carriers the A and B sides are customarily recorded simultaneously, the record carrier then being transported in a specific recording direction. This recording direction may be the same, for example, as the transport direction during reproduction of the A side. In that case a marker M₁,M₂ equal to '0,1' is to be generated which is then stored at the location in the first byte shown in Fig. 4. The information for the B side is in that case recorded on this side in a direction opposite to the reproduction direction for the B side. If this recording direction is similar to the transport direction during reproduction of the B side, the marker M₁,M₂ is equal to '1,0'. The information for the A side is in that case recorded on this side in a direction opposite to the reproduction direction for the A side.

Fig. 6 shows in a diagram the complete transmission circuit of a consumer recording and reproducing device. Fig. 6a shows the recording side which comprises an input terminal 1. The input terminal 1 is used for receiving information, for example, in the form of an audio signal, a mono or a stereo audio signal, and is coupled to an input 2 of a coding unit 3. The coding unit 3 may be arranged, for example, as a subband coder as described in one of afore-mentioned EP-A-372 601 (Dutch Patent Applications No. 8802769 and No. 8901032) or EP-A- 289080 all in the name of the Applicants.

In such a subband coder the audio signal is digitized and sampled and then subdivided into a number of subband signals by means of sample frequency reduction in a number of subband filters. These subband signals are applied to unit 5 over the line 4, in which unit these subband signals are prepared for being transmitted by the medium. The unit 5 comprises, for example, an 8-to-10 converter. Such an 8-10 converter is described, for example, in EP-A-150082 in the name of the Applicants. In this converter, 8-bit data words are converted to 10-bit codewords. Parity bits may be extended to the information to be transmitted with the aim of making an error correction of the information received at the receiver end possible.

The unit 5 is arranged for distributing the coded information and applying this distributed and coded information to n outputs 7.1 to 7.n. These n outputs are coupled to n write heads 8.1 to 8.n respectively. These write heads are used for writing the information in the n tracks T_{b.1} to T_{b.n} respectively, on the record carrier.

The unit 5 further has an input 9 for receiving the information which is to have such a form that it can be recorded as an auxiliary signal in the track T_{b.n+1} on the record carrier. For this purpose, the unit 5 has an output 7.n+1 which is coupled to a write head 8.n+1.

As already observed hereinbefore, in a consumer device the two-bit number '0,0' is to be generated for the markers M₁,M₂ during recording, which number is to be stored at the appropriate location in the first byte AD₀ of a body. Such a two-bit number may easily be generated in the unit 10 and the two-bit number is accommodated in a body in similar fashion to the other information accommodated in this body, so that further explanation is redundant here.

With the recording device shown in Fig. 6a it is alternatively possible to record an audio signal in the tracks T_{a.1} to T_{a.n}, and the associated auxiliary signal in the track T_{n.a+1}. This may be realised by rotating the head device 8.1, 8.2, ..., 8.n, 8.n+1 in such a way that it can cooperate with the tracks T_{a.1} to T_{a.n+1.} Another option is that the arrangement shown in Fig. 6a comprises a second head device which includes n+1 heads which have a fixed disposition relative to the tracks T_{a.1} to T_{a.n+1} on the record carrier. When the A side is recorded, the outputs 7.1 to 7.n+1 are then to be switched electrically to this second head device.

Fig. 6b shows the reproduction side of the arrangement. The arrangement comprises a number of read heads 14.1, 14.2, 14.3, ..., 14.n coupled each through an associated equalization filter EQ₁, EQ₂, ... EQₙ respectively, to an input 15.1, 15.2, 15.3 ..., 15.n respectively of a read unit 16.

The unit 16 is arranged for converting the coded information read from the tracks T_{b.1} to T_{b.n} to the original subband signals and for supplying these subband signals over the line 17 to the subband decoder 18 which combines the subband signals again by means of a sample frequency increase to the digital (audio) signal that can be presented at the output 19 subsequent to digital-to-analog conversion. While the signal read from the record carrier is being decoded, the unit 16 may thus be in a position to make an error correction while using the parity bits and converting the 10-bit channel words back to 8-bit information words.

The unit 16 further includes a read head 14.n+1 for reading the auxiliary signal from the track T_{b.n+1}.

While using the codewords and the sync signals in the headers of the blocks in the auxiliary signal, see Fig. 3b, the reproducing device may reach the state of synchronism after the start of the reading operation, so that the unit 16 may derive the information stored in the bodies from the read data stream. Then, a 10-to-8 conversion is made for the auxiliary signal and, as required, an error correction with the aid of the 12 parity bits, after which the 8-bit words as discussed with respect to Fig. 4 are available. Because the unit 16 is synchronized with the incoming auxiliary signal data stream, the unit 16 is capable of deriving the markers M₁ and M₂ from this data stream, that is to say, by detecting the values of the bits 3 and 2 respectively, of the first byte AD₀. When the B side is read out, actually only the second marker M₂ needs to be derived. The unit 16 generates a first or second control signal as a function of this marker and presents this signal at an output 25. This control signal is applied to control signal inputs of the equalization filters EQ₁ to EQₙ over the line 26. The equalization filters are arranged for realising a first transfer characteristic in response to the first control signal applied to their control signal inputs and for realising a second transfer characteristic in response to the second control signal applied to their control signal inputs.

Fig. 6b clarifies that no equalization is made of the information read from the auxiliary track. The reason for this may be that such an equalization is not necessary due to the different frequency character of the auxiliary signal compared with the frequency character of the information in the other tracks. If, however, equalization is necessary indeed, the line from the head 14.n+1 to the input 15.n+1 may additionally include an equalizer also driven by the control signal over the line 26. The filtering of the auxiliary signal performed by this additional equalization filter may be different from the filtering performed by the other equalizers.

Fig. 7 shows in greater detail the signal processing by the unit 16 of the information in the headers for obtaining the control signal. The block referenced 41 performs the 10-to-8 conversion of the information in the headers of the blocks read from the track T_{a.n+1} or T_{b.n+1}, after which the information is applied to a detector 42.

A first possibility is that the detector 42 derives the two markers M₁ and M₂ from this information and applies them to the control signal generator 43. In that case the generator 43 will generate the control signal from the first or second marker respectively, and present same at the output, in response to a "side information" signal SI applied to the generator 43 through the terminal 44 and indicating which side, either A or B side, is reproduced. If the marker is '0', the first control signal will be generated and if the marker is '1', the second control signal will be generated. The "side information" signal SI may be derived from the auxiliary signal read from the auxiliary track, that is, if side information is included in the auxiliary signal. In a reproducing device of the autoreverse type the signal SI may also be obtained from the transport direction during reproduction, assuming that the cassette which houses the record carrier may be inserted into the reproducing device in only one way. Another possibility is that the device comprises operating keys denoting the side to be reproduced. In that case the signal SI may be derived from these keys.

A second possibility is that the detector 42 derives only the marker M₁ or M₂ belonging to the side being reproduced at that moment. This means that the "side information" signal SI is to be applied to the detector 42 instead of being applied to the control signal generator 43.

The former possibility is advantageous in that the two markers are available at the output of the detector 42, so that in the event of an autoreverse action a change to the other filter settings of the equalization filters EQ₁ to EQₙ may be made forthwith without the need for reading from this side the marker belonging to the other side.

Fig. 8 shows two embodiments of an equalization filter EQᵢ, where i varies from 1 to n. The equalization filter shown in Fig. 8a comprises two filters F₁ and F₂ and a switch S. The input 50 of the equalization filter is coupled to the output of the reproducing head 14.i, the control signal input 52 is coupled to the output 25 of the unit 16, and the output 51 is coupled to the input 15.i of the unit 16. In response to the first control signal applied to the control signal input 52, the switches S of the equalization filters all have the top position and the filters F₁ thus perform a first filtering on the information read from the tracks. In response to the second control signal applied to the control signal input 52, the switches S of the equalization filters all have the bottom position and so the filters F₂ perform a second filtering on the information read from the tracks.

Fig. 8b shows a second embodiment of an equalization filter. The equalization filter comprises a digital filter DF to which a set of filter coefficients is applied over the line 55 so as to realise a specific transfer. The filter further includes a selector SEL and two memories 55 and 56 in which first and second sets of filter parameters (filter coefficients) FPS1 and FPS2 respectively, are stored. The selector SEL has a selection signal input 52 which is coupled to the output 25 of the unit 16. In response to the first control signal applied to the input 52, the selector SEL selects the first set of parameters from the memory 55 and applies them to the digital filter DF over the line 55 thus realising the first filtering. In response to the second control signal applied to the input 52, the selector SEL selects the second set of parameters and applies them to the digital filter DF over the line 55 thus realising the second filtering. The selector SEL and the memories 55 and 56 are shared by all the equalization filters.

For obtaining prerecorded record carriers a master is made in a first mastering step which master, in a subsequent duplicating step, is repeated and read out at a higher data rate and recorded on a slave medium. The markers may already have been included in the information recorded on the master, or be added to the information to be copied during the recurrent copying to the slave medium. The first possibility is detrimental in that duplicating is only possible in one way, that is, in a transport direction as indicated by the markers already present on the master. The second possibility permits duplicating the information recorded on a master tape but which does not yet include any markers, when the A and B sides are duplicated in accordance with one's wishes as regards the transport direction of the slave medium.

If the A and B sides are copied simultaneously in a transport direction corresponding to the transport direction of the record carrier during reproduction of the A side, a two-bit number '0,1' is recorded for the markers M₁ and M₂ at the appropriate position in the byte AD₀. If the A and B sides are copied simultaneously in a transport direction corresponding to the transport direction of the record carrier during reproduction of the B side, a two-bit number '1,0' is recorded for the markers M₁, M₂ at the appropriate position in the byte AD₀.

If the A side is copied in the transport direction corresponding to the reproducing direction of the A side, and then the B side is copied in a direction corresponding to the reproduction direction of the B side, a two-bit number '0,0' is recorded as a marker in the byte AD₀.

If the two sides are copied in reverse direction, which practically does not ever occur, the two-bit number '1,1' is recorded as a marker in the byte AD₀.

According to the second embodiment, the markers denoting in which direction the information available on a side of the record carrier has been recorded are recorded on the cassette housing.

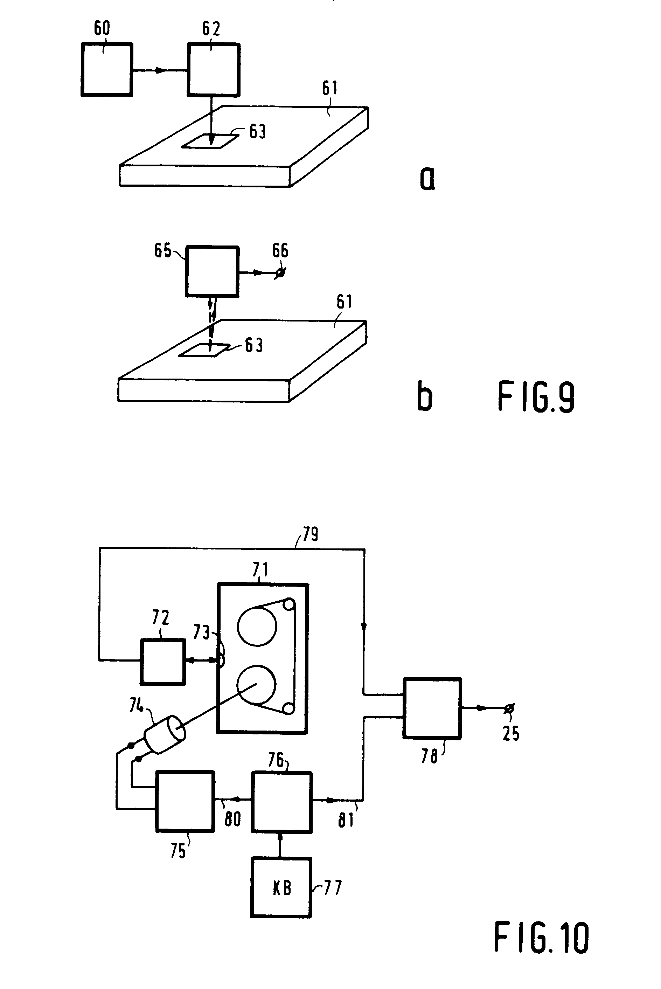

Fig. 9 shows in a diagram how the markers may be recorded and detected on the cassette housing. Fig. 9a shows how the markers are recorded on the cassette housing 61. The recording arrangement comprises a marker signal generator 60 which generates the first and second markers and applies these markers to the second recording means 62. These recording means 62 record the markers at a specific position 63 on the cassette housing. The markers may be recorded in magnetic form on the housing. In that case the housing comprises a strip of magnetizable material at position 63, and the means 62 comprise a magnetic head. The markers may also be optical. In that case an optically recordable strip having, for example dents, is provided on the housing at position 63 and the means 62 comprise an optical write source. The markers may also be mechanical. By this is understood that the presence or absence of a hole in the housing at position 63 forms the first marker. The second marker may then be obtained in similar fashion. In that case the means 62 comprise a punch.

Fig. 9b shows a detection arrangement 65 for detecting the markers at position 63 on the housing. At the output 66 the control signals appear in response to the detected markers. The detection arrangement 65 may be a magnetic detection arrangement. The arrangement 65 then comprises a magnetic reproducing head. The detection arrangement 65 may also be an optical detection arrangement. The arrangement 65 then comprises a light source for emitting a light beam and a light detector for detecting the reflected light. The arrangement 65 may also be a mechanical detection arrangement. In that case the arrangement 65 comprises a sensor. Fig. 9b shows the optical detection of the markers.

A further possible solution will be discussed hereinafter. Let us assume that a fixed agreement can be made between the manufacturers of prerecorded record carriers that the prerecorded record carriers are always recorded in the same fashion. For example, the A side is then always recorded in forward direction and the B side always in reverse direction. Such prerecorded record carriers are then to include a marker denoting that it is a prerecorded record carrier. During reproduction from a record carrier in the reproducing device it is only necessary to detect which side is played and whether a prerecorded record carrier is concerned. This information may be used for deriving which equalization filter is to be utilized.

Fig. 10 shows an embodiment of a reproducing device operating in this fashion. Only the relevant parts necessary for utilizing the correct equalization filter are shown. The prerecorded cassette 71 has a marker 73 in the form of a hole in the cassette housing denoting that it is a prerecorded cassette. The device comprises a detector 72 for detecting this marker and for producing a detection signal to be applied to the first input of a gate circuit 78 over the line 79. The device also includes detecting means 76 for detecting which side is played, A or B. These detecting means 76 are included, for example, in the central processor of the device. In response to the keys 77 being operated, a specific reproduction transport direction can be selected. This is realised by applying a control signal over the line 80 to the motor drive 75 for driving the transport motor 74. If the cassette can be inserted into the device in only one manner, this simultaneously determines the side that is played. Alternatively, a detection is to be made how the cassette has been inserted. This may be effected in a mechanical manner or in an electrical manner. This means that the holes in the cassette housings are to be detected which holes denote the top or bottom of the cassette housing.

Another possibility is that the digital information or the auxiliary information recorded on the record carrier comprises information denoting the side that is played. By detecting this information the played side can be detected. In that case, a second detection signal denoting the side played is applied to the gate circuit 78 over the line 81. The control signal applied to the input 52 of the equalization filter means EQ₁ then appears at the output 25.

It should be observed in this respect that the invention is not to be restricted solely to the applications explained with respect to the drawing Figures. The invention is also applicable to recording and reproducing systems in which the audio and/or auxiliary signal are recorded on the record carrier according to a different format. Furthermore, the markers may be recorded on the record carrier in a different manner. For example, the first marker (recurrent marker in longitudinal direction of the record carrier) may be recorded on the A side and only the second marker (recurrently) on the B side. In addition, the markers need not be stored in a separate track on the record carrier. The markers may also be recorded in an audio track and may then be located in a sub-frequency range separated from the frequency range in which the coded audio information is located in the bandwidth of the information recorded in the track.

Alternatively, the first and second markers may be combined to a codeword. Since the markers provide four options, four codewords are necessary. The first codeword then denotes that the two sides have been recorded in forward direction, the second codeword denotes that side A has been recorded in forward and side B in reverse direction, the third codeword then denotes that side A has been recorded in reverse and side B in forward direction and the fourth codeword then denotes that both sides have been recorded in reverse direction.

### BIBLIOGRAPHY

(1) EP-A-0 455 293, Dutch Patent Application No. 90.01.038
(2) EP-A-0 456 299, Dutch Patent Application No. 90.01.039
(3) EP-A-0 436 991, Dutch Patent Application No. 90.00.039
(4) EP-A-0 448 160, Dutch Patent Application No. 90.00.635

## Claims

1. Arrangement for obtaining recorded tape-like magnetic record carriers comprising digital information, for example digital audio information, recorded on an A and a B side, which sides comprise each one or more contiguous tracks running in longitudinal direction on the record carrier in which tracks the digital information is recorded, the information being recorded in the tracks on the A and B sides in such a way that the record carrier is to be transported in a first direction for reproducing the digital information from a track on the A side and the record carrier is to be transported in a second direction opposite to the first direction for reproducing the digital information from a track on the B side, which arrangement comprises recording means for recording the digital information in the tracks on the A and B sides, characterized in that the arrangement comprises marker signal generator means (10) for generating a first marker (M₁) denoting the transport direction of the record carrier (20) during the recording of information in the said one or more tracks on the A side, and for generating a second marker (M₂) denoting the transport direction of the record carrier during the recording of information in the said one or more tracks on the B side, and means for recording the first and second markers.

2. Arrangement as claimed in Claim 1, characterized in that the recording means are further arranged for recording the first marker on the A side and for recording the second marker on the B side, and in that an input of the recording means is thereto coupled to an output of the marker signal generator means.

3. Arrangement as claimed in Claim 2, characterized in that the recording means are arranged for recurrently recording the first and second markers in an auxiliary channel on the A and B sides respectively of the record carrier.

4. Arrangement as claimed in Claim 3, for obtaining recorded tape-like magnetic record carriers which furthermore comprise an auxiliary track on the A and B sides in which digital auxiliary information corresponding to the information in said auxiliary channel is recorded, characterized in that the recording means are arranged for recurrently recording the first and second markers in the auxiliary channel on the A and B sides respectively.

5. Arrangement as claimed in Claim 4, in which the signal in an auxiliary track has the form of successive frames, each frame comprising a number of blocks, each block comprising a header for recording a codeword and a sync signal, and a body for recording additional information, characterized in that the recording means are arranged for recording a first or second marker respectively, in the body of a block.

6. Arrangement as claimed in Claim 5, characterized in that the recording means are arranged for recording first or second markers respectively, in the bodies of successive blocks.

7. Arrangement as claimed in Claim 5 or 6, characterized in that a body of a block comprises a number of n p-bit words and in that the first and/or second marker is/are included in the first p-bit word in the body.

8. Arrangement as claimed in one of the Claims 2 to 7, characterized in that the recording means are arranged for recurrently recording the first and second markers on the A and B sides.

9. Arrangement as claimed in one of the Claims 2 to 8, characterized in that the first and second markers have each the form of a 1-bit number, one value of the number denoting that a side of the record carrier is recorded with a transport direction corresponding to the direction in which this side is to be played, the other value of the number denoting that the side is recorded in reverse direction.

10. Arrangement as claimed in Claim 9, insofar as dependent on Claim 7, characterized in that the p-bit words in the body of a block are obtained after an m-to-p modulation of m-bit words, in that m = 8, in that the first and second markers are recorded at the third and fourth positions seen from the least significant bit of the 8-bit word that has led to the first p-bit word in the body.

11. Record carrier obtained with the arrangement as claimed in one of the Claims 2 to 10, the A-side having a first marker (M₁) recorded on it denoting the transport direction of the record carrier during recording of information on the A-side, the B-side having a second marker (M₂) recorded on it denoting the transport direction of the record carrier during recording of information on the B-side.

12. Reproducing device for reproducing the record carrier as claimed in Claim 11, comprising reading means which include a read head device for reading digital information from a track on the A or B side, and equalization means for performing an equalization filtering on the digital information read from a track, characterized in that the read head device is further arranged for reading from the A or B side the first or second marker respectively, in that the reading means further include generator means for deriving first and second control signals respectively, from the markers belonging to a side of the record carrier while the digital information is being read out from this side depending on whether the transport direction during reproduction is similar or opposite respectively, to the transport direction during recording, in that the equalization means are arranged for performing, in response to the first or second control signal respectively, a first or second equalization filtering on the digital information read from the tracks.

13. Reproducing device as claimed in Claim 12, characterized in that the read head device comprises detection means for deriving the first or second marker from an auxiliary channel on the A or B side respectively.

14. Reproducing device as claimed in Claim 13, in which the read head device is arranged for reading digital auxiliary information from an auxiliary track on the A and B sides, said first or second marker being included in the auxiliary track, characterized in that the detection means are arranged for deriving the first or second marker from the digital auxiliary information read from the auxiliary track on the A or B side respectively.

15. Reproducing device as claimed in Claim 14, in which the signal in an auxiliary track has the form of successive frames, each frame comprising a number of blocks, each block comprising a header for recording a codeword and a sync signal, and a body for recording additional information, said first or second marker being included in the body of a block, characterized in that the detection means are arranged for deriving the first or second marker from the body.

16. Reproducing device as claimed in Claim 15, which first and second markers are included in the body of a block, characterized in that the detection means are arranged for deriving the first and second markers from the body.

17. Reproducing device as claimed in Claim 15 or 16, in which a body of a signal block comprises a number of n p-bit words and in that the first and/or second marker is/are included in the first p-bit word in the body, characterized in that the detection means are arranged for deriving the first and/or second marker(s) from the first p-bit word in the body.

18. Reproducing device as claimed in Claim 17, insofar as dependent on Claim 16, characterized in that the p-bit words in the body of a signal block subsequent to being read from the record carrier are converted to m bit words *via* a p-to-m modulation, in that m = 8, in that the first and second markers are included in the third and fourth positions seen from the least significant bit of the 8-bit word obtained from the first p-bit word in the body after modulation, and in that the detection means are arranged for deriving the first and second markers from the third and fourth positions of the first 8-bit word.

19. Arrangement as claimed in Claim 1, characterized in that the arrangement comprises second recording means arranged for recording the first and second markers on a cassette housing accommodating the record carrier, and in that an input of the second recording means is thereto coupled to an output of the marker signal generator means.

20. Arrangement as claimed in Claim 19, characterized in that the second recording means are arranged for recording the markers in magnetic form on the cassette housing.

21. Arrangement as claimed in Claim 19, characterized in that the second recording means are arranged for recording markers in optical form on the cassette housing.

22. Arrangement as claimed in Claim 19, characterized in that the second recording means are arranged for recording in mechanical form markers on the cassette housing.

23. Cassette with record carrier obtained with the arrangement according to one of the Claims 19 to 22, the cassette housing comprising a first marker (M₁) and a second marker (M₂) denoting the transport direction during recording of the A and B sides of the record carrier, respectively.

24. Reproducing device for reproducing the record carrier accommodated in the cassette as claimed in Claim 23, comprising reading means which contain a read head device for reading the digital information from a track on the A or B side, equalization means for performing an equalization filtering on the digital information read from a track, characterized in that the reproducing device comprises second reading means arranged for reading the first or second markers from the cassette housing, in that the second reading means further include generating means for deriving a first or second control signal from the markers belonging to a side of the record carrier while the digital information is being read from this side, which depends on whether the transport direction during reproduction is similar as or opposite respectively, to the transport direction during recording, in that the equalization means are arranged for performing, in response to the first or second control signal, a first or second equalization filtering respectively, on the digital information read from the tracks.

25. Reproducing device as claimed in Claim 24, characterized in that the second reading means are arranged for optically reading the markers.

26. Reproducing device as claimed in Claim 24, characterized in that the second reading means are arranged for magnetically reading the markers.

27. Reproducing device as claimed in Claim 24, characterized in that the second reading means are arranged for mechanically reading the markers.

28. Reproducing device for reproducing a recorded record carrier, comprising reading means which include a read head device for reading digital information from a track on an A or B side, equalization means for performing an equalization filtering on the digital information read from a track, characterized in that the reproducing device further includes first means for denoting which side of the record carrier is being read out, second means for detecting whether the record carrier to be reproduced is a prerecorded record carrier having the A-side recorded in a first predetermined direction and the B-side recorded in a second predetermined direction, or not and producing or not a detection signal in response thereto, and includes a gate circuit having inputs coupled to outputs of the first means and the second means, and an output, which gate circuit is arranged for deriving at the output a first or second control signal from the output signals of the first and second means which control signal denotes whether the transport direction of the record carrier during reproduction of the digital information from the track is similar or opposite to the transport direction of the record carrier when the information was recorded in the track concerned, and in that the equalization means are arranged for performing, in response to the first or second control signal respectively, a first or second equalization filtering on the digital information read from the tracks.

29. Record carrier to be used in a reproducing device as claimed in Claim 28, characterized in that the record carrier comprises a marker denoting that the record carrier is a prerecorded record carrier, having the A-side recorded in a first predetermined direction and the B-side recorded in a second predetermined direction.

30. Record carrier as claimed in Claim 29, characterized in that the marker is in the form of a magnetic marker.

31. Record carrier as claimed in Claim 29, characterized in that the marker is in the form of an optical marker.

32. Record carrier as claimed in Claim 29, characterized in that the marker is in the form of a mechanical marker.

33. Record carrier as claimed in one of the Claims 29 to 32, accommodated on a cassette, characterized in that the marker is provided on/in the cassette housing.

## Patentansprüche

1. Anordnung zum Erhalten bandförmiger bespielter magnetischer Aufzeichnungsträger mit digitaler Information, beispielsweise digitaler Audio-Information, aufgezeichnet auf einer A- und einer B-Seite, wobei diese Seiten je eine oder mehrere sich nebeneinander in der Längsrichtung über den Aufzeichnungsträger erstreckende Spuren aufweisen, wobei in diesen Spuren die digitale Information aufgenommen ist, wobei die in die Spuren auf der A- und B-Seite aufgezeichnete Information derart aufgezeichnet ist, daß zum Wiedergeben der digitalen Information aus einer Spur der A-Seite der Aufzeichnungsträger in einer ersten Transportrichtung transportiert werden muß und zum Wiedergeben der digitalen Information aus einer Spur der B-Seite der Aufzeichnungsträger in einer der ersten Transportrichtung entgegengesetzten zweiten Transportrichtung transportiert werden muß, wobei diese Anordnung mit Aufzeichnungsmitteln versehen ist zum Aufzeichnen der digitalen Information in den Spuren auf der A- und B-Seite, dadurch gekennzeichnet, daß die Anordnung mit Markierungssignalgeneratormitteln versehen ist zum Erzeugen einer ersten Markierung (M1), welche die Transportrichtung des Aufzeichnungsträgers beim Aufzeichnen der Information in der Spur der A-Seite angibt, und zum Erzeugen einer zweiten Markierung (M2), welche die Transportrichtung des Aufzeichnungsträgers beim Aufzeichnen der Information in der Spur der B-Seite angibt, und mit Mitteln zum Aufzeichnen der ersten und der zweiten Markierung.

2. Anordnung nach Anspruch 1, dadurch gekennzeichnet, daß die Aufzeichnungsmittel weiterhin dazu eingerichtet sind, auf der A-Seite die erste Markierung aufzuzeichnen und auf der B-Seite die zweite Markierung aufzuzeichnen, und daß ein Eingang der Aufzeichnungsmittel dazu mit einem Ausgang der Markierungssignalgeneratormittel gekoppelt ist.

3. Anordnung nach Anspruch 2, dadurch gekennzeichnet, daß die Aufzeichnungsmittel dazu eingerichtet sind, die erste und die zweite Markierung wiederholt in einem Hilfskanal auf der A- bzw. B-Seite des Aufzeichnungsträgers aufzuzeichnen.

4. Anordnung nach Anspruch 3 zum Erhalten bespielter magnetischer Aufzeichnungsträger, die außerdem mit einer Hilfsspur auf der A- und der B-Seite versehen sind, in denen digitale Hilfsinformation entsprechend der Information in dem genannten Hilfskanal aufgezeichnet ist, dadurch gekennzeichnet, daß die Aufzeichnungsmittel dazu eingerichtet sind, die erste und die zweite Markierung in dem Hailfskanal auf der A-und der B-Seite wiederholt aufzuzeichnen.

5. Anordnung nach Anspruch 4, wobei das Signal in einer Hilfsspur in Form aufeinanderfolgender Rahmen vorhanden ist, wobei jeder Rahmen eine Anzahl Blöcke aufweist, wobei jeder Block einen ersten Blockteil mit einem Codewort und einem Synchronsignal, sowie einen zweiten Blockteil zum Aufzeichnen zusätzlicher Information aufweist, dadurch gekennzeichnet, daß die Aufzeichnungsmittel dazu eingerichtet sind, eine erste bzw. zweite Markierung in dem zweiten Blockteil eines Blocks aufzuzeichnen.

6. Anordnung nach Anspruch 5, dadurch gekennzeichnet, daß die Aufzeichnungsrnittl dazu eingerichtet sind, in den zweiten Blockteilen aufeinanderfolgender Blöcke eine erste bzw. zweite Markierung aufzuzeichnen.

7. Anordnung nach Anspruch 5 oder g, dadurch gekennzeichnet, daß in zweiter Blockteil eine n-Zahl p-Bits Wörter aufweist und daß die erste und/oder zweite Markierung in das erste p-Bits Wort in dem zweiten Blockteil aufgenommen ist/sind.

8. Anordnung nach einem der Ansprüche 2 bis 7, dadurch gekennzeichnet, daß die Aufzeichnungsmittel dazu eingerichtet sind, auf der A- sowie der B-Seite wiederholt die esrte und die zweite Markierung aufzuzeichnen.

9. Anordnung nach einem der Ansprüche 2 bis 8, dadurch gekennzeichnet, daß die erste und die zweite Markierung je in Form einer 1-Bits Zahl sind, wobei der eine Wert der Zahl angibt, daß eine Seite des Aufzeichnungsträgers bei einer Transportrichtung aufgezeichnet worden ist, die der Richtung entspricht, in der diese Seite abgespielt werden soll, wobei der andere Wert der Zahl angibt, daß die Seite in der entgegengesetzten Richtung aufgezeichnet worden ist.

10. Anordnung nach Anspruch 9, insofern abhängig von Anspruch 7, dadurch gekennzeichnet, daß die p-Bits Wörter in dem zweiten Blockteil nach einer m-zu-p-Modulation aus m-Bits Wörtern erhalten worden sind, daß für m gilt: m = 8, daß die erste und die zweite Markierung, von dem am wenigsten signifikanten Bit gesehen, an die dritte und vierte Stelle desjenigen 8-Bits Wortes aufgenommen sind, das zu dem ersten p-Bits Wort in dem zweiten Blockteil geführt hat.

11. Aufzeichnungsträger, erhalten mit der Anordnung nach einem der Ansprüche 2 bis 10, wobei die A-Seite eine erste aufgzeichnete Markierung aufweist, welche die Transportrichtung des Aufzeichnungsträgers beim Aufzeichnen von Information auf der A-Seite angibt, wobei die B-Seite eine zweite aufgezeichnete Markierung aufweist, welche die Transportrichtung des Aufzeichnungsträgers beim Aufzeichnen von Information auf der B-Seite angibt.

12. Wiedergabeanordnung zum Wiedergaben des Aufzeichnungsträgers nach Anspruch 11, mit Auslesemitteln, die eine Lesekopfeinrichtung aufweisen zum aus einer Spur auf der A- oder der B-Seite Auslesen der digitalen Information, mit Ausgleichmitteln zum Durchführen einer Ausgleichfilterung an der aus einer Spur ausgelesenen digitalen Information, dadurch gekennzeichnet, daß die Lesekopfeinrichtung weiterhin dazu eingerichtet ist, aus der A- oder der B-Seite die erste bzw. zweite Markierung auszulesen, daß die Auslesemittel weiterhin Erzeugungsmittel aufweisen zum beim Auslesen der digitalen Information von einer Seite des Aufzeichnungsträgers ein erstes bzw. zweites Steuersignal aus den Markierungen herzuleiten, die zu dieser Seite gehören, je nachdem, ob die Transportrichtung bei der Wiedergabe dieselbe ist wie die bzw. entgegengesetzt ist zu der Transportrichtung bei der Aufnahme, daß die Ausgleichmittel dazu eingerichtet sind, um unter dem Einfluß des ersten bzw. zweiten Steuersignals eine erste bzw. zweite Ausgleichfilterung an der aus den Spuren ausgelesenen digitalen Information durchzuführen.

13. Wiedergabeanordnung nach Anspruch 12, dadurch gekennzeichnet, daß die lesekopfeinrichtung mit Detektionsmitteln versehen ist zum aus einem Hilfskanal auf der A-Seite bzw. B-Seite Herleiten der ersten bzw. zweiten Markierung.

14. Wiedergabeanordnung nach Anspruch 13, wobei die Lesekopfeinrichtung dazu eingerichtet ist, aus einer Hilfsspur auf der A- und der B-Seite digitale Hilfsinformation auszulesen, wobei die genannnte erste bzw. zweite Markierung in die Hilfsspur aufgenommen ist , dadurch gekennzeichnet, daß die Detektionsmittel dazu eingerichtet sind, aus der aus der Hilfsspur der A- und B-Seite ausgelesenen digitalen Hilfsinformation die erste bzw. zweite Markierung herzuleiten.

15. Wiedergabeanordnung nach Anspruch 14, wobei das Signal in einer Hilfsspur in Form aufeinanderfolgender Rahmen ist, wobei jeder Rahmen eine Anzahl Blöcke aufweist, wobei jeder Block einen ersten Blockteil mit einem Codewort und einem Synchronsignal aufweist, und einen zweiten Blockteil zum Aufnehmen zusätzlicher Information aufweist, wobei die genannte erste bzw. zweite Markierung in den zweiten Blockteil eines Blocks aufgenommen ist, dadurch gekennzeichnet, daß die Detektionsmittel dazu eingerichtet sind, aus dem zweiten Blockteil die erste bzw. zweite Markierung herzuleiten.

16. Wiedergabeanordnung nach Anspruch 15, wobei die erste und die zweite Markierung sich in dem zweiten Blockteil eines Blocks befinden, dadurch gekennzeichnet, daß die Detektionsmittel dazu eingerichtet sind, die erste und die zweite Markierung aus dem zweiten Blockteil herzuleiten.

17. Wiedergabeanordnung nach Anspruch 15 oder 16, wobei ein zweiter Blockteil eine n-Zahl p-Bits Wörter aufweist und die erste und/oder zweite Markierung in das erste p-Bits Wort in dem zweiten Blockteil aufgenommen ist/sind, dadurch gekennzeichnet, daß die Detektionsmittel dazu vorgesehen sind, aus dem ersten p-Bits Wort in dem zweiten Blockteil die erste und/oder zweite Markierung herzuleiten.

18. Wiedergabeanordnung nach Anspruch 17, insofern abhängig von Anspruch 16, dadurch gekennzeichnet, daß die p-Bits Wörter in dem zweiten Blockteil eines Signalblocks nach dem Auslesen aus dem Aufzeichnungsträger in einer p-zu-m-Modulation zu m-Bits Wörtern umgewandlet worden sind, daß für m = 8 gilt, daß die erste und die zweite Markierung in die dritte und vierte Stelle, von dem am wenigstens signifikanten Bit aus gesehen, desjenigen 8-Bits Wortes aufgenommen sind, das nach Modulation aus dem ersten p-Bits Wort in dem zweiten Blockteil erhalten worden ist und daß die Detektionsmittel dazu eingerichtet sind, aus der dritten und vierten Stelle des ersten 8-Bits Wortes die erste und die zweite Markierung herzuleiten.

19. Anordnung nach Anspruch 1, dadurch gekennzeichnet, daß daß diese mit zweiten Aufzeichnungsmitteln versehen ist, die dazu eingerichtet sind, auf einem Kassettengehäuse, in den der Aufzeichnungsträger aufgenommen ist, die erste und die zweite Markierung aufzunehmen, und daß ein Eingang der zweiten Aufzeichnungsmittel dazu mit einem Ausgang der Markierungssignalerzeugungsmittel gekoppelt ist.

20. Anordnung nach Anspruch 19, dadurch gekennzeichnet, daß die zweiten Aufzeichnungsmittel dazu eingerichtet sind, die Markierungen in magnetischer Form auf dm Kassettengehäuse aufzuzeichnen.

21. Anordnung nach Anspruch 19, dadurch gekennzeichnet, daß die zweiten Aufzeichnungsmittel dazu eingerichtet sind, die Markierungen in optischer Form auf dem Kassettengehäuse aufzuzeichnen.

22. Anordnung nach Anspruch 19, dadurch gekennzeichnet, daß die zweiten Aufzeichnungsmittel dazu eingerichtet sind, die Markierungen in mechanischer Form auf dem Kassettengehäuse anzubringen.

23. Kassette mit einem Aufzeichnungsträger erhalten mit der Anordnung nach einem der Ansprüche 19 bis 22, wobei das Kassettengehäuse eine erste und eine zweite Markierung aufweist, welche die Transportrichtung bim Aufzeichnen der A- und der B-Seite des Aufzeichnungsträgers bezeichnen.

24. Wiedergabeanordnung zum Wiedergeben Datenspeichereinheit Aufzeichnungsträgers in der Kassette nach Anspruch 23, mit Auslesemitteln mit einer Lesekopfeinrichtung zum aus einer Spur auf der A- oder der B-Seite Auslesen der digitalen Information, mit Ausgleichmitteln zum Durchführen einer Ausgleichsfilterung an der aus einer Spur ausgelesenen digitalen Information, dadurch gekennzeichnet, daß die Wiedergabeanordnung zweite Auslesemittel aufweist, die dazu eingerichtet sind, von dem Kassettengehäuse die erste bzw. zweite Markierung auszulesen, daß die zweiten Auslesemittel weiterhin Erzeugungsmittel aufweisen um beim Auslesen der digitalen Information von einer Seite des Aufzeichnungsträgers ein erstes bzw. zweites Steuersignal aus den dieser Seite zugeordneten Markierungen herzuleiten, je nachdem ob die Transportrichtung bei der Wiedergabe dieselbe ist wie die bzw. entgegengesetzt ist zu der Transportrichtung bei der Aufnahme, daß die Ausgleichmittel dazu eingerichtet sind, um unter dem Einfluß des ersten bzw. zweiten Steuersignals eine erste bzw. zweite Ausgleichfilterung an der aus den Spuren ausgelesenen digitalen Information durchzuführen.

25. Wiedergabeanordnung nach Anspruch 24, dadurch gekennzeichnet, daß die zweiten Auslesemitteln dazu eingerichtet sind, auf optische Weise die Markierungen auszulesen.

26. Wiedergabeanordnung nach Anspruch 24, dadurch gekennzeichnet, daß die zweiten Auslesemitteln dazu eingerichtet sind, auf magnetische Weise die Markierungen auszulesen.

27. Wiedergabeanordnung nach Anspruch 24, dadurch gekennzeichnet, daß die zweiten Auslesemitteln dazu eingerichtet sind, auf mechanische Weise die Markierungen auszulesen.

28. Wiedergabeanordnung zum Wiedrgaben eines bespielten Aufzeichnungsträgers, dessen A-Seite in einer vorbestimmten Richtung aufgezeichnet worden ist und dessen B-Seite ggf. in einer der genannten vorbestimmten Richtung entgegengesetzten Richtung aufgezeichnet worden ist, mit Auslesemitteln mit einer Lesekopfeinrichtung zum aus einer Spur auf einer A- oder einer B-Seite Auslesen der digitalen Information, mit Ausgleichmitteln zum Durchführen einer Ausgleichfilterung an der aus einer Spur ausgelesenen digitalen Information, dadurch gekennzeichnet, daß die Wiedergabeanordnung weiterhin mit ersten Mitteln versehen ist um anzugeben, welche Seite des Aufzeichnungsträgers ausgelesen wird, mit zweiten Mitteln zum Detektieren, ob der wiederzugebende Aufzeichnungsträger ein bespielter Aufzeichnungsträger ist oder nicht und um in Abhängigkeit davon ggf. ein Detektionssignal abzugeben, und mit einer Gatterschaltung versehen ist, deren Eingänge mit Ausgängen der ersten Mittel, der zweiten Mittel und mit einem Ausgang, wobei diese Gatterschaltung dazu eingerichtet ist, in Abhängigkeit von den Ausgangssignalen der ersten und der zweiten Mittel an dem Ausgang in erstes oder ein zweiten Steuersignal herzuleiten, das angibt, ob die Transportrichtung des Aufzeichnungsträgers bei der Wiedergabe der digitalen Information aus der Spur der Transportrichtung des Aufzeichnungsträgers beim Aufzeichnen der Information in der betreffenden Spur entspricht oder dieser Richtung entgegengesetzt ist, und daß die Ausgleichmittel dazu eingerichtet sind, unter dem Einfluß des ersten bzw. des zweiten Steuersignals eine erste bzw, zweite Ausgleichfilterung an der aus den Spuren ausgelesenen digitalen Information durchzuführen.

29. Aufzeichnungsträger zum Gebrauch in einer Wiedergabeanordnung nach Anspruch 28, dadurch gekennzeichnet, daß der Aufzeichnungsträger mit einer Markierung versehen ist, die angibt, daß der Aufzeichnungsträger ein bespielter Aufzeichnungsträger ist.

30. Aufzeichnungsträger nach Anspruch 29, dadurch gekennzeichnet, daß die Markierung in Form einer magnetischen Markierung vorhanden ist.

31. Aufzeichnungsträger nach Anspruch 29, dadurch gekennzeichnet, daß die Markierung in Form einer optischen Markierung vorhanden ist.

32. Aufzeichnungsträger nach Anspruch 29, dadurch gekennzeichnet, daß die Markierung in Form einer mechanischen Markierung vorhanden ist.

33. Aufzeichnungsträger nach Anspruch 29 bis 32, vorgesehen in einer Kassette, dadurch gekennzeichnet, daß die Markierung auf/in dem Kassettengehäuse vorgesehen ist.

## Revendications

1. Dispositif de réalisation de supports d'enregistrement magnétiques en forme de bande enregistrée comprenant des informations numériques, par exemple des informations audionumériques, enregistrées sur une face A et une face B, lesquelles faces comprennent chacune une ou plusieurs pistes contiguës s'étendant dans la direction longitudinale sur le support d'enregistrement, pistes dans lesquelles les informations numériques sont enregistrées, les informations étant enregistrées dans les pistes des faces A et B de telle sorte que le support d'enregistrement doive être entraîné dans une première direction pour reproduire les informations numériques à partir d'une piste de la face A et que le support d'enregistrement doive être entraîné dans une deuxième direction opposée à la première direction pour reproduire les informations numériques à partir d'une piste de la face B, lequel dispositif comprend des moyens d'enregistrement pour enregistrer les informations numériques dans les pistes des faces A et B, caractérisé en ce que le dispositif comprend des moyens générateurs de signaux marqueurs pour produire un premier marqueur (M₁) indiquant la direction d'entraînement du support d'enregistrement (20) durant l'enregistrement des informations dans la piste de la face A, et pour produire un deuxième marqueur (M₂) indiquant la direction d'entraînement du support d'enregistrement (20) durant l'enregistrement des informations dans la piste de la face B, et des moyens pour enregistrer les premier et deuxième marqueurs.

2. Dispositif suivant la revendication 1, caractérisé en ce que les moyens d'enregistrement sont de plus configurés pour enregistrer le premier marqueur sur la face A et pour enregistrer le deuxième marqueur sur la face B, et en ce qu'une entrée des moyens d'enregistrement y est couplée à une sortie des moyens générateurs de signaux marqueurs.

3. Dispositif suivant la revendication 2, caractérisé en ce que les moyens d'enregistrement sont configurés en outre pour enregistrer de manière récurrente les premier et deuxième marqueurs dans un canal auxiliaire respectivement sur les faces A et B du support d'enregistrement.

4. Dispositif suivant la revendication 3, pour la réalisation des supports d'enregistrement magnétiques en forme de bande enregistrée qui comprennent de plus une piste auxiliaire sur les faces A et B, dans laquelle des informations numériques auxiliaires correspondant aux informations contenues dans ledit canal auxiliaire sont enregistrées, caractérisé en ce que les moyens d'enregistrement sont configurés pour enregistrer de manière récurrente les premier et deuxième marqueurs dans le canal auxiliaire respectivement sur les faces A et B.

5. Dispositif suivant la revendication 4, dans lequel le signal contenu dans une piste auxiliaire a la forme de trames successives, chaque trame comprenant un certain nombre de blocs, chaque bloc comprenant un en-tête pour enregistrer un mot code et un signal de synchronisation, et un corps pour enregistrer des informations supplémentaires, caractérisé en ce que les moyens d'enregistrement sont configurés pour enregistrer respectivement un premier ou un deuxième marqueur dans le corps d'un bloc.

6. Dispositif suivant la revendication 5, caractérisé en ce que les moyens d'enregistrement sont configurés pour enregistrer respectivement le premier ou le deuxième marqueur dans les corps de blocs successifs.

7. Dispositif suivant la revendication 5 ou 6, caractérisé en ce qu'un corps d'un bloc comprend un nombre de n mots de p bits et en ce que le premier et/ou le deuxième marqueurs est/sont inclus dans le premier mot de p bits dans le corps.

8. Dispositif suivant les revendications 2 à 7, caractérisé en ce que les moyens d'enregistrement sont configurés pour enregistrer de manière récurrente les premier et deuxième marqueurs sur les faces A et B.

9. Dispositif suivant les revendications 2 à 8, caractérisé en ce que les premier et deuxième marqueurs ont chacun la forme d'un nombre de 1 bit, une valeur du nombre indiquant qu'une face du support d'enregistrement est enregistrée dans une direction d'entraînement correspondant à la direction dans laquelle cette face doit être jouée, l'autre valeur du nombre indiquant que la face est enregistrée dans la direction opposée.

10. Dispositif suivant la revendication 9, dans la mesure où elle dépend de la revendication 7, caractérisé en ce que les mots de p bits contenus dans le corps d'un bloc sont obtenus après une modulation m à p de mots à m bits, en ce que m = 8, en ce que les premier et deuxième marqueurs sont enregistrés à la troisième et à la quatrième positions vues à partir du bit le moins significatif du mot de 8 bits qui a conduit au premier mot de p bits dans le corps.

11. Support d'enregistrement obtenu avec le dispositif suivant l'une quelconque des revendications 2 à 10, la face A présentant un premier marqueur enregistré sur elle, indiquant la direction d'entraînement du support d'enregistrement durant l'enregistrement des informations sur la face A, la face B présentant un deuxième marqueur enregistré sur elle, indiquant la direction d'entraînement du support d'enregistrement durant l'enregistrement des informations sur la face B.

12. Dispositif de reproduction pour la reproduction du support d'enregistrement suivant la revendication 11, comprenant des moyens de lecture qui comprennent un dispositif à tête de lecture pour lire des informations numériques à partir d'une piste de la face A ou B, et des moyens d'égalisation pour réaliser un filtrage d'égalisation sur les informations numériques lues à partir d'une piste, caractérisé en ce que le dispositif à tête de lecture est en outre configuré pour lire, à partir de la face A ou B, respectivement le premier ou le deuxième marqueur, en ce que les moyens de lecture comprennent également des moyens générateurs pour dériver respectivement les premier et deuxième signaux de commande, à partir des marqueurs appartenant à une face du support d'enregistrement, pendant que les informations numériques sont lues à partir de cette face selon que la direction d'entraînement durant la reproduction est respectivement similaire ou opposée à la direction d'entraînement durant l'enregistrement, en ce que les moyens d'égalisation sont configurés pour réaliser, en réaction respectivement au premier ou au deuxième signal de commande, un premier ou un deuxième filtrage d'égalisation sur les informations numériques lues à partir des pistes.

13. Dispositif de reproduction suivant la revendication 12, caractérisé en ce que le dispositif à tête de lecture comprend des moyens de détection pour dériver le premier ou le deuxième marqueur à partir d'un canal auxiliaire respectivement sur la face A ou B.

14. Dispositif de reproduction suivant la revendication 13, dans lequel le dispositif à tête de lecture est configuré pour lire des informations numériques auxiliaires à partir d'une piste auxiliaire sur les faces A et B, ledit premier ou deuxième marqueur étant inclus dans la piste auxiliaire, caractérisé en ce que les moyens de détection sont configurés pour dériver le premier ou le deuxième marqueur des informations numériques auxiliaires lues à partir de la piste auxiliaire respectivement sur la face A ou B.

15. Dispositif de reproduction suivant la revendication 14, dans lequel le signal sur la piste auxiliaire a la forme de trames successives, chaque trame comprenant un certain nombre de blocs, chaque bloc comprenant un en-tête pour enregistrer un mot code et un signal de synchronisation, et un corps pour enregistrer des informations supplémentaires, ledit premier ou deuxième marqueur étant inclus dans le corps d'un bloc, caractérisé en ce que les moyens de détection sont configurés pour dériver le premier ou le deuxième marqueur à partir du corps.

16. Dispositif de reproduction suivant la revendication 15, dans lequel le premier et le deuxième marqueurs sont inclus dans le corps d'un bloc, caractérisé en ce que les moyens de détection sont configurés pour dériver les premier et deuxième marqueurs à partir du corps.

17. Dispositif de reproduction suivant la revendication 15 ou 16, dans lequel un corps d'un bloc de signal comprend un certain nombre de n mots de p bits et le premier et/ou deuxième marqueurs est/sont inclus dans le premier mot de p bits dans le corps, caractérisé en ce que les moyens de détection sont configurés pour dériver le premier et/ou le deuxième marqueur(s) à partir du premier mot de p bits dans le corps.

18. Dispositif de reproduction suivant la revendication 17, dans la mesure où elle dépend de la revendication 16, caractérisé en ce que les mots de p bits dans le corps d'un bloc de signal, après avoir été lus à partir du support d'enregistrement, sont convertis en mots de m bits via une modulation p à m, en ce que m = 8, en ce que les premier et deuxième marqueurs sont inclus dans les troisième et quatrième positions vues à partir du bit le moins significatif du mot de 8 bits obtenu à partir du premier mot de p bits dans le corps après modulation, et en ce que les moyens de détection sont configurés pour dériver les premier et deuxième marqueurs à partir de la troisième et quatrième positions du premier mot de 8 bits.

19. Dispositif suivant la revendication 1, caractérisé en ce que le dispositif comprend des deuxièmes moyens d'enregistrement configurés pour enregistrer les premier et deuxième marqueurs sur un boîtier de cassette abritant le support d'enregistrement, et en ce qu'une entrée des deuxièmes moyens d'enregistrement y est couplée à une sortie des moyens générateurs de signaux marqueurs.

20. Dispositif suivant la revendication 19, caractérisé en ce que les deuxièmes moyens d'enregistrement sont configurés pour enregistrer les marqueurs sous forme magnétique sur le boîtier de la cassette.

21. Dispositif suivant la revendication 19, caractérisé en ce que les deuxièmes moyens d'enregistrement sont configurés pour enregistrer les marqueurs sous forme optique sur le boîtier de la cassette.

22. Dispositif suivant la revendication 19, caractérisé en ce que les deuxièmes moyens d'enregistrement sont configurés pour enregistrer sous forme mécanique des marqueurs sur le boîtier de la cassette.

23. Cassette avec support d'enregistrement, obtenue avec le dispositif suivant l'une quelconque des revendications 19 à 22, le boîtier de la cassette comprenant un premier et un deuxième marqueurs indiquant la direction d'entraînement durant l'enregistrement des faces respectivement A et B du support d'enregistrement.

24. Dispositif de reproduction pour la reproduction du support d'enregistrement logé dans la cassette suivant la revendication 23, comprenant des moyens de lecture qui contiennent un dispositif à tête de lecture pour lire les informations numériques à partir d'une piste de la face A ou B, des moyens d'égalisation pour réaliser un filtrage d'égalisation sur les informations numériques lues à partir d'une piste, caractérisé en ce que le dispositif de reproduction comprend des deuxièmes moyens de lecture configurés pour lire le premier ou deuxième marqueur à partir du boîtier de la cassette, en ce que les deuxièmes moyens de lecture comprennent en plus des moyens de génération pour dériver un premier ou un deuxième signal de commande à partir des marqueurs appartenant à une face du support d'enregistrement pendant que les informations numériques sont lues à partir de cette face, selon que le direction d'entraînement durant la reproduction est respectivement similaire ou opposée à la direction d'entraînement durant l'enregistrement, en ce que les moyens d'égalisation sont configurés pour réaliser, en réaction au premier ou au deuxième signal de commande, respectivement un premier ou un deuxième filtrage d'égalisation, sur les informations numériques lues à partir des pistes.

25. Dispositif de reproduction suivant la revendication 24, caractérisé en ce que les deuxièmes moyens de lecture sont configurés en vue d'une lecture optique des marqueurs.

26. Dispositif de reproduction suivant la revendication 24, caractérisé en ce que les deuxièmes moyens de lecture sont configurés en vue d'une lecture magnétique des marqueurs.

27. Dispositif de reproduction suivant la revendication 24, caractérisé en ce que les deuxièmes moyens de lecture sont configurés en vue d'une lecture mécanique des marqueurs.

28. Dispositif de reproduction pour la reproduction d'un enregistrement enregistré (71), comprenant des moyens de lecture qui comprennent un dispositif à tête de lecture pour lire des informations numériques à partir d'une piste d'une face A ou B, des moyens d'égalisation pour réaliser un filtrage d'égalisation sur les informations numériques lues à partir d'une piste, caractérisé en ce que le dispositif de reproduction comprend en outre des premiers moyens pour indiquer quelle face du support d'enregistrement est en cours de lecture, des deuxièmes moyens pour détecter si le support d'enregistrement à reproduire est un support d'enregistrement préenregistré ou non, et produire ou non un signal de détection en réaction, et comprend un circuit-porte ayant des entrées couplées aux sorties des premiers et deuxièmes moyens, et une sortie, lequel circuit-porte est configuré pour dériver à la sortie un premier ou deuxième signal de commande à partir des signaux de sortie des premiers et deuxièmes moyens, lequel signal de commande indique si la direction d'entraînement du support d'enregistrement durant la reproduction des informations numériques à partir de la piste est similaire ou opposée à la direction d'entraînement du support d'enregistrement lorsque les informations ont été enregistrées dans la piste concernée, et en ce que les moyens d'égalisation sont configurés pour réaliser, en réaction respectivement au premier ou deuxième signal de commande, un premier ou deuxième filtrage d'égalisation sur les informations numériques lues à partir des pistes.

29. Support d'enregistrement destiné à être utilisé dans un dispositif de reproduction suivant la revendication 28, caractérisé en ce que le support d'enregistrement comprend un marqueur indiquant que le support d'enregistrement est un support d'enregistrement préenregistré.

30. Support d'enregistrement suivant la revendication 29, caractérisé en ce que le marqueur a la forme d'un marqueur magnétique.

31. Support d'enregistrement suivant la revendication 29, caractérisé en ce que le marqueur a la forme d'un marqueur optique.

32. Support d'enregistrement suivant la revendication 29, caractérisé en ce que le marqueur a la forme d'un marqueur mécanique.

33. Support d'enregistrement suivant l'une quelconque des revendications 29 à 32, logé sur une cassette, caractérisé en ce que le marqueur est prévu sur/dans le boîtier de la cassette.
